# EUROPEAN PATENT APPLICATION

(11) **EP 1 589 424 A2**
(43) Date of publication of application: **26.10.2005**
(21) Application number: 05250409.9
(22) Date of filing: 26.01.2005
(51) Int. Cl.: G06F 9/50

(54) **Vertical perimeter framework for providing application services in multi-CPU environments**

(30) Priority: 28.01.2004 US 767021
(71) Applicant: SUN MICROSYSTEMS, INC., Santa Clara, California 95054 (US)
(72) Inventor: Tripathi, Sunay, San Jose, California 95124 (US); Ota, Eiji, Cupertino, California 95014 (US)
(74) Representative: Harris, Ian Richard

(57) **Abstract**

Techniques for providing application services in a multi-CPU environment are disclosed. The techniques provide a "vertical perimeter" framework suitable for processing applications and their related data in multi-CPU environments. In this vertical perimeter framework, an instance (i.e., a copy) of a service provider application is provided for each CPU in the multi-CPU environment in accordance with one embodiment of the invention. Each one of the application instances is processed by a CPU that is designated to process that particular application instance. Furthermore, each one of the CPU's is assigned to process incoming connections from a particular network interface.

## Description

### BACKGROUND OF THE INVENTION

Computer systems typically utilize a layered approach for implementing functionalities relating to communications frameworks where a protocol layer is a program module for processing different portions of data traveling from a network to an application or when the application decides to send data out to remote peer over the network. The layered approach requires examination of data by each protocol layer to determine if any work needs to be performed by that layer before sending the data to the next protocol layer.

Conventional perimeters provide per module, per protocol stack layer, or horizontal perimeters. This leads to the same packets being processed on more than one Central Processing Unit (CPU) in a multi-CPU environment. In addition, conventional techniques typically provide only a single application in multi-CPU environments. This means that the application can be processed by different CPU's at various times. In addition, data related to the application (application data) is shared between the CPU's.

The application can, for example, be a web server, a database program, or any other application that provides services to one or more other entities (e.g., clients, or other application programs). The server provider application can, for example, be implemented in a server that serves a number of other entities (e.g., clients in computing network). These clients can access the server using various network protocols (e.g., TCP) through various network interfaces (e.g., Ethernet cards).

In any case, conventionally, a single copy of the application is shared between multiple CPU's in a multi-CPU environment (e.g., multi-processor server). This means that data related to the service provider application (application data) may be stored and processed by a different CPU at various times. Typically, for better efficiency, the application data is stored in a primary or a secondary cache associated with the CPU that is currently processing the application. As a result, context switching has to be performed. This means that, among other things, application data has to be transferred from the cache of one CPU to the cache of another CPU. In other words, any one of the CPU's can be interrupted when data (e.g., a packet) is received via a network interface. The CPU that is interrupted needs to access application data. However, the application related data can be in the cache of another CPU (i.e., not the interrupted CPU). Context switching requires a significant amount of time and resources.

### Summary

In view of the foregoing, techniques for providing application services in multi-CPU environments are needed. Accordingly, techniques for providing application services are disclosed. Application services can, for example, be provided by a service-provider computing node (e.g., server) to other computing nodes (e.g., clients) that are connected in a computer network. The service-provider computing node (e.g., server) can provide various network interfaces (e.g., Ethernet cards) that are used by other computing nodes (e.g., clients) to establish a connection. The services of the service-provider computing node (e.g., server) can, in turn, be provided via these connections (e.g., server).

Embodiments of the invention provide a "vertical perimeter" framework suitable for processing applications and their related data in multi-CPU environments. In this vertical perimeter framework, an instance (i.e., a copy) of an application is provided for each CPU in accordance with one embodiment of the invention. Each one of the application instances is processed by a CPU that is designated to process that particular application instance. Furthermore, each one of the CPU's is assigned to process incoming connections from a particular network interface.

As a result, each application instance is bound to a CPU, which is in turn bound to a particular network interface. As will be appreciated, the "vertical perimeter" framework allows application related data to be stored and made available for processing by each one of the CPU's when it is needed. Thus, there is no need to transfer application data from one CPU to another.

In addition, in at least one embodiment, a CPU is not arbitrarily interrupted by incoming data (e.g., packet) received via the network interfaces. In this case, a packet of a given connection may be processed from beginning to end by a single processor that has been assigned to the network interface receiving the packet. As will be appreciated, this can be achieved without contending for additional locks and getting queued at each protocol layer. In one embodiment, the vertical perimeter framework comprises an example of a kernel data structure (e.g., a serialization queue type), and a worker thread controlled by an s-queue where both may be bound to a single processor. This single processor processes all packets of the connection through the protocol layers (e.g., IP, TCP, and socket layers) without interruption.

In accordance with embodiments of the present invention, a connection instance is assigned to a single vertical perimeter represented by an s-queue and its corresponding packets are only processed within the assigned vertical perimeter. An s-queue is processed by a single thread at a time and all data structures used to process a given connection from within the perimeter can be accessed without additional locking or mutual exclusion, thus improving both processor (e.g., CPU, performance and thread context data locality). Access of the connection meta data, the packet meta data, and the packet payload data is localized, thus reducing retrieval time for such data (e.g., in a localized cache specific to the CPU processing the packet). Once a packet is picked up for processing, for example, the thread enters the s-queue to process a packet, no additional locks are required and the packet is processed through all protocol layers without additional queuing.

In a multi-processor server system in accordance with embodiments of the invention, each s-queue is assigned to a different processor. Packet traversal through the protocol layers (e.g., NIC, IP, TCP, and socket), is generally not interrupted except to queue another task onto the s-queue. S-queue connections are assigned to a particular s-queue at the connection setup time, for example, during a three-way handshake, and all packets for that connection are processed on the assigned s-queue only. Any queuing required for inbound or outbound packets is only at the time of entering the s-queue.

These and other objects and advantages of the present invention will become obvious to those of ordinary skill in the art after having read the following detailed description of embodiments, which are illustrated in the various drawing figures.

### Brief Description of the Drawings

Embodiments of the invention are described, by way of example only, in the accompanying drawings, in which:
Fig. 1A is a logical block diagram of an example of an embedded computer or server system in accordance with an embodiment of the present invention.
Fig. 1B illustrates a computer network in accordance with one embodiment of the invention.
Fig. 2 illustrates a computing node in accordance with another embodiment of the invention.
Fig. 3A illustrates a method for providing application services in a multi-CPU environment in accordance with one embodiment of the invention.
Fig. 3B illustrates an operation 310 for automatically binding an instance of a service provider application in a multi-CPU environment in accordance with one embodiment of the invention.
Fig. 4 is a block diagram of an example of a server system wherein packets associated with a connection are assigned, routed and processed by the same processor in accordance with an embodiment of the present invention.
Fig. 5 is an illustrative representation of an example of a connection data structure in accordance with an embodiment of the present invention.
Fig. 6 is a flow diagram of an example of a process for classifying a connection and assigning the connection to a single processor in accordance with the embodiments of the present invention.
Fig. 7 is a flow diagram of an example of a process for queuing packets in an s-queue specific to a processor in accordance with an embodiment of the present invention.

### Description

Reference will now be made in detail to embodiments of the invention, examples of which are illustrated in the accompanying drawings. While the invention will be described in conjunction with embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well-known methods, procedures, components, and circuits have not been described in detail as not to unnecessarily obscure aspects of the present invention.

### Notation and Nomenclature

Some portions of the detailed descriptions that follow are presented in terms of procedures, logic blocks, processing, and other symbolic representations of operations on data bits within a computer memory. These descriptions and representations are the means used by those skilled in the data processing arts to most effectively convey the substance of their work to others skilled in the art. A procedure, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, bytes, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "receiving," "creating," "connecting," "transferring," "sending," "updating," "entering", "computing" or the like, refer to the action and processes (e.g., process 600 and 700) of a computer or computerized server system or similar intelligent electronic computing device, that manipulates and transforms data represented as physical (electronic) quantities within the computer system's registers and memories into other data similarly represented as physical quantities within the computer system memories or registers or other such information storage, transmission or display devices.

### Conventional System

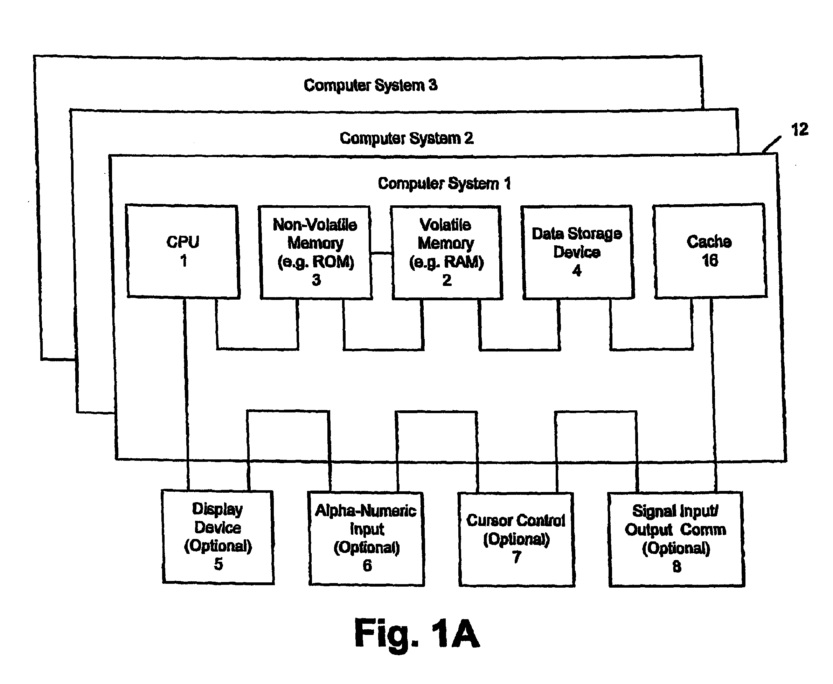

Referring now to Fig. 1A, a block diagram of an example of a computer system 12 is shown. It is appreciated that computer system 12 of Fig. 1A described herein illustrates an example of a configuration of an operational platform upon which embodiments of the present invention can be implemented. Nevertheless, other computer systems with differing configurations can also be used in place of computer system 12 within the scope of the present invention. For example, computer system 12 could be a server system, a personal computer, an embedded computer system or a system in which one or more of the components of the computer system is located locally or remotely and accessed via a network.

Computer system 12 may include multiple processors and includes: an address/data bus 10 for transmitting data; a central processor unit 1 coupled with bus 10 for processing information and instructions, a cache 16 coupled with bus 10 for temporarily storing data; a volatile memory unit 2 (e.g., random access memory, static RAM, dynamic RAM, etc.) coupled with bus 10 for storing information and instructions for central processor unit 1; a non-volatile memory unit 3 (e.g., read only memory, programmable ROM, flash memory, EPROM, EEPROM, etc.) coupled with bus 10 for storing static information and instructions for central processor unit 1; and a data storage device 4 (e.g., disk drive) for storing information and instructions.

Computer system 12 may also optionally be configured with: a display device 5 coupled with bus 10 for displaying information to the computer user; an alphanumeric input device 6 arranged to communicate information and command selections to central processor unit 1; a cursor control or directing device 7 coupled with bus 10 for communicating user input information and command selections to central processor unit 1; and a signal communication interface 8 (e.g. a serial port) , coupled with bus 10. It is noted that the components associated with system 12 described above may be resident to and associated with one physical computing device. However, one or more of the components associated with system 12 may be physically distributed to other locations and be communicatively coupled together (e.g., via a network).

### Providing Application Services

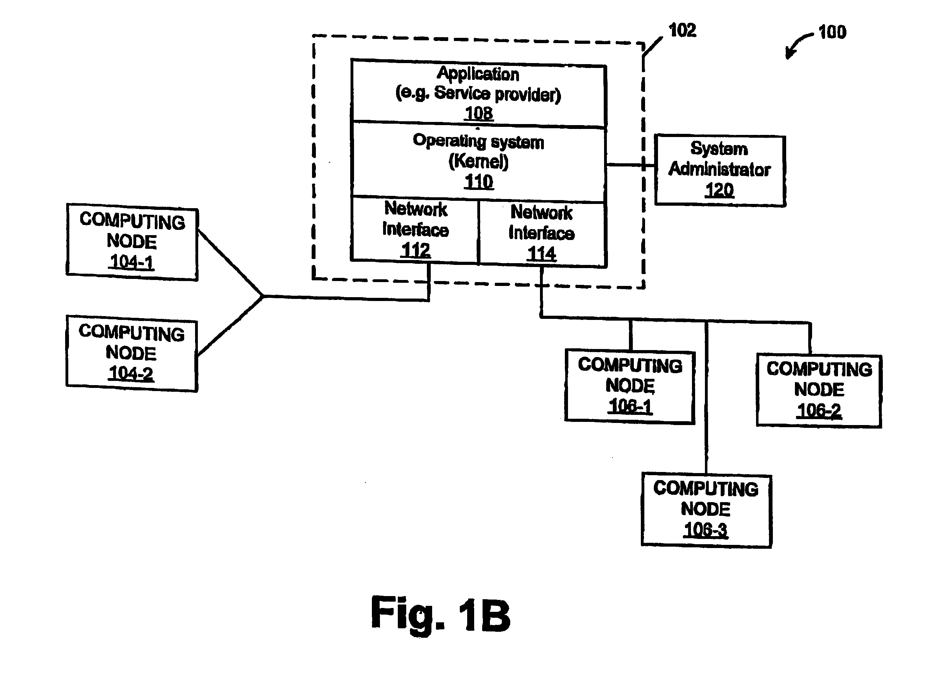

Fig. 1B illustrates a computer network 100 in accordance with one embodiment of the invention. Computing network 100 includes computing nodes 102, 104-1, 104-2, 106-1, 106-2, and 106-3. In the computer network 100, computing node 102 can function as a "server" with respect to computing nodes 104-1 and 106-1. In other words, computing node 102 can provide the computing nodes 104 and 106 with various computing services. These computing services can, for example, be Web services, database services, or any other computing service that can be provided by a server to other computing components (e.g., clients).

Services can be provided by an application (or service provider application) 108 that runs on the computing node 102. The application 108 is typically supported by an operating system (or kernel) 110. It should be noted that the computing 104 et seq. and 106 et seq. use network interfaces 112 and 114 respectively to access the services provided by the application 108.

As can be appreciated, the operating system 110 can ensure that each of the network interfaces 112 and 114 may be configured to interrupt a designated CPU. In other words, the designated CPU is configured to process the connections (i.e. data transferred via the connections) that are established through a selected network interface (e.g., network interfaces 112 and 114). Accordingly, each CPU in the multi-CPU environment is effectively "bound" to a network interface. Moreover, the operating system 110 may be arranged to automatically bind a CPU to the connections established via a particular network interface. In addition to binding the CPU, the operating system 110 may further provide an instance of the application 108 for each CPU (e.g. 104-1 or 106-1) that is bound to a particular network interface. These provided instances of the application 108 are also bound to the CPU and the network interface that is designated to process the network interface.

This automatic binding allows, for example, a network administration 120 to configure the computing node 102 by simply running an instance of the service provider application for each one the network interfaces that are going to be used. As will be appreciated, automatic binding can be achieved without requiring further intervention.

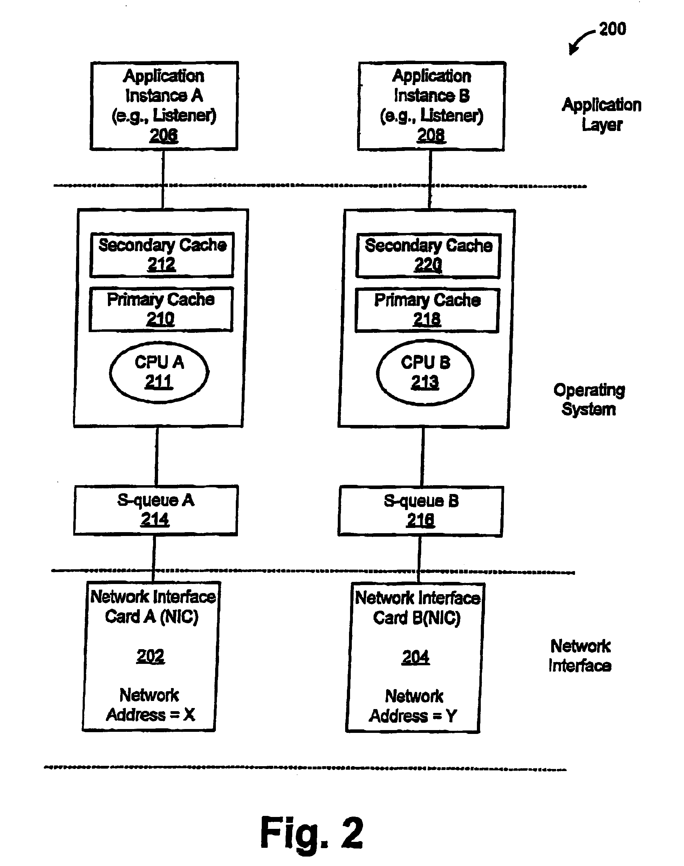

Fig. 2 illustrates a computing node 200 in accordance with another embodiment of the invention. The computing node 200 can, for example, represent the computing node 102 of Fig. 1B. As shown in Fig. 2, the computing node 200 includes network interface cards 202 and 204. The network interface card 202 or 204 can, for example, be an Ethernet card, Token Ring card, or any network card (or adaptor) that can serve as a network interface. As illustrated in Fig. 2, for each of the network interface cards 202 and 204, an instance of the application (or service provider application) is provided. Namely, the application instance 206 is provided for the network interface card 202 and the application instance 208 is provided for network interface card 204.

By way of example, an application instance may be a listener that listens for the network address assigned to the network interface cards. For example, the application instance 206 may be configured as a listener application that listens for the network address (e.g., IP address) X assigned to the network interface card 202. Similarly, the application instance 208 may be configured as a listener application that listens for the network address (e.g., IP address) Y assigned to the network interface card 204.

It should be noted that a CPU 211 is designated for running the application instance 206. Similarly, a CPU 213 is designated for running the application instance 208. As a result, data objects (or data structures) associated with the application instance 206 may be cached in primary cache 210 or in secondary cache 212. In addition, the network interface card 202 is bound to the CPU 211 via a sequential queue (s-queue) 214. This means that the network interface card 202 will always interrupt CPU 211 where it can have access to the application related data cached in the primary cache 210 or secondary cache 212.

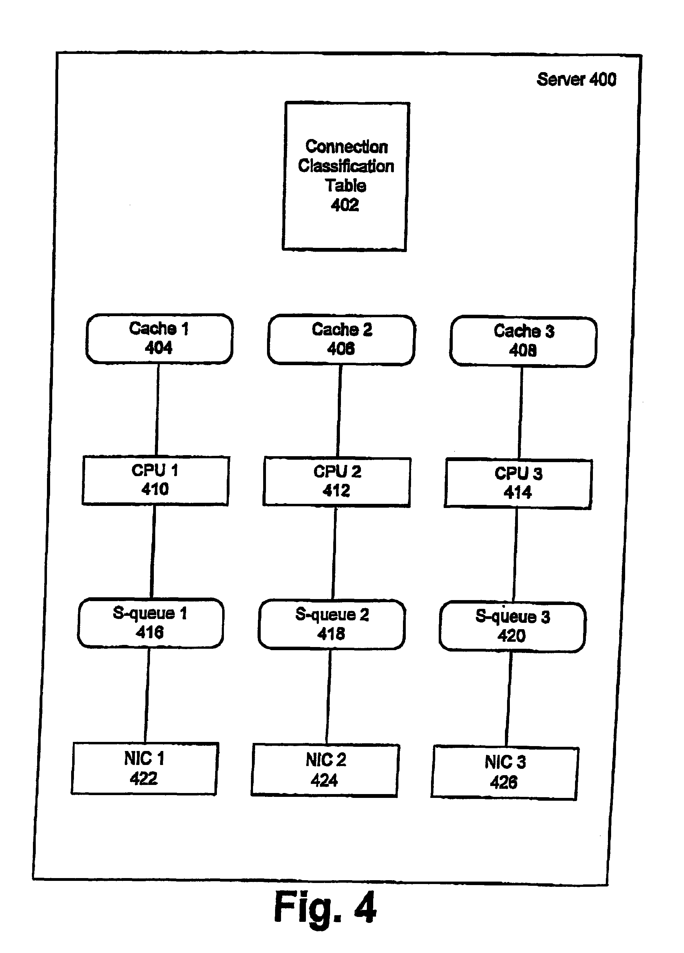

Similarly, the network interface card 204 is bound to the CPU 213 s-queue via s-queue 216. As a result, the network interface card 204 will always interrupt CPU 213 where it can have access to the application related data cached in a primary cache 218 and a secondary cache 220. Accordingly, the network interface card 204 will not interrupt another CPU (e.g., CPU 211) in computing node 200. Furthermore, there is no need to access primary cache 210 or secondary cache 212 of the CPU 211 to access application related data because the data objects related to application instance 208 are cached in primary cache 218 and secondary cache 220. The computing node 200 can, for example, be implemented as a multiprocessor server in a TCP connection environment (see for example, multiprocessor sever of Fig. 4). The functionally of the s-queue 214 and s-queue 216 are further described below with respect to Fig. 4.

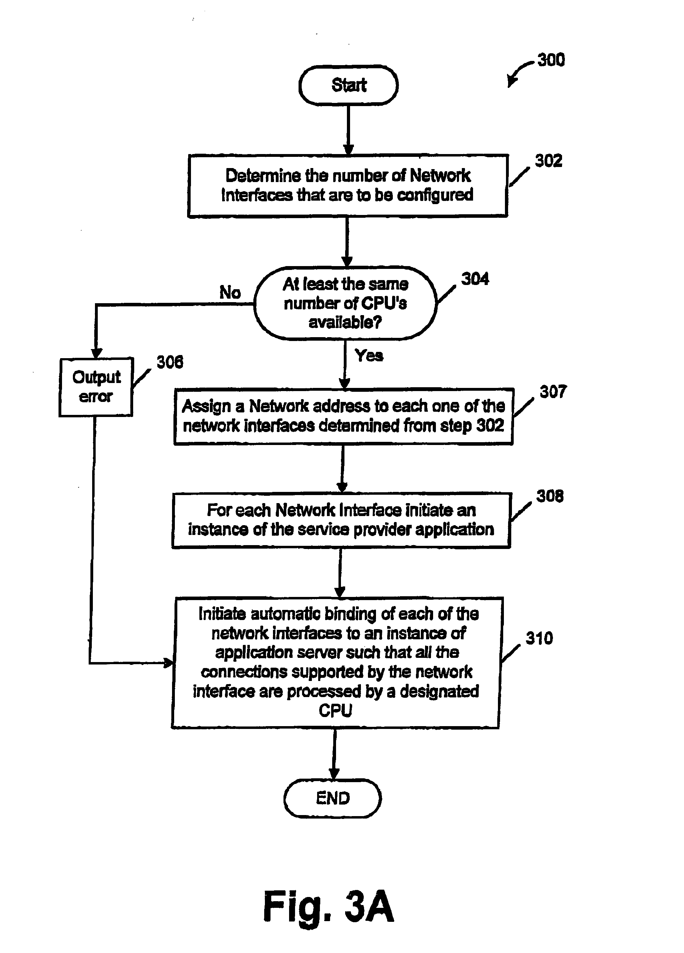

Fig. 3A illustrates a method 300 for providing application services in a multi-CPU environment in accordance with an embodiment of the invention. The method 300 can, for example, be used by the computing node 100 of Fig. 1B. Moreover, the method 300 can, for example, be implemented to allow a system administrator (e.g., system administrator 120 of Fig. 1B) to configure the multi-CPU system with ease. As will become apparent from the description provided below, this allows the system administrator to perform selected administrative tasks (e.g., operations 302, 307 and 308) while the operating system will perform other selected tasks (e.g., operation 310).

Initially, at operation 302, the number of network interfaces that are to be configured in the computing node (e.g., a multi-CPU server) is determined. Notably, the number of network interfaces does not necessarily equal the number of CPU's in a given system. That is, in some examples, more than one network interface may be assigned to a selected CPU. In at least one embodiment the number of network interfaces equals the number of CPU's, which may result in further efficiencies. Further, network interfaces may vary in type and function. For example, some network interfaces may be configured to access local nodes or components over a private interconnect as in clustered environments while other network interfaces may be configured to access remote nodes or components over a public interconnect as in over the Internet. Next, at operation 304, it is determined whether at least one CPU can be assigned to each one of the network interfaces. If it is determined at operation 304 that at least one CPU cannot be assigned to each one of the network interfaces, the method 300 proceeds to operation 306 where an error can be output. After outputting any relevant errors, the method 300 ends following operation 306.

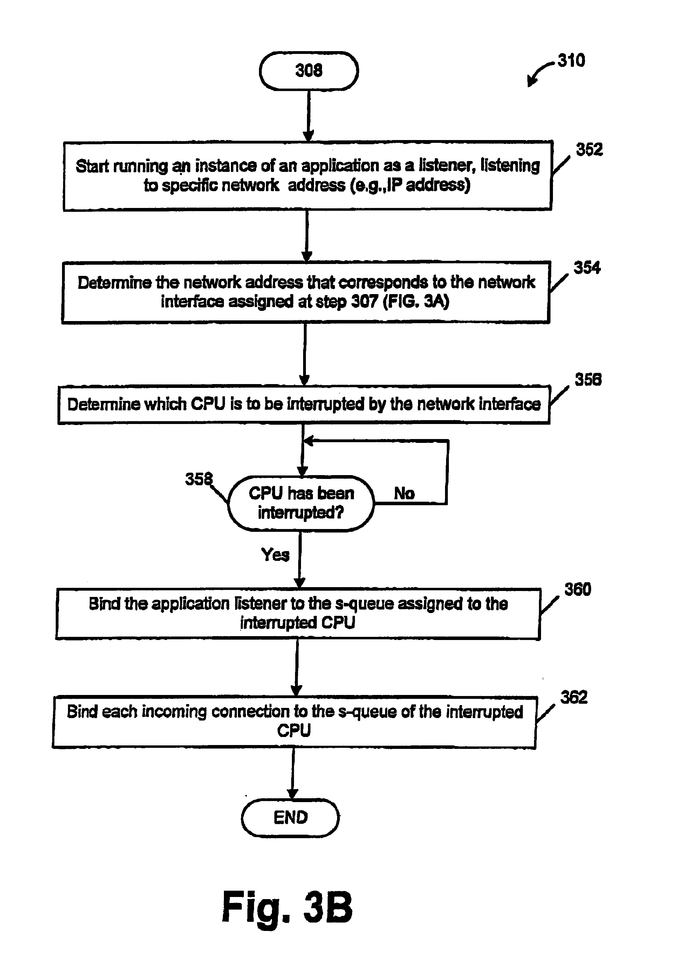

However, if it is determined at operation 304 that at least one CPU can be assigned to each one of the network interfaces, the method 300 proceeds to operation 307 where a network address is assigned to each one of the network interfaces. Determining network addresses is well-known in the art and may be accomplished in any number of conventional methods. Next, at operation 308, for each network interface determined at operation 302, an instance of a service provider application is initiated. Once the service provider instances are running, operation 310 initiates automatic binding of each of the network interfaces to their respective service provider instances such that all the connections supported by the network interface are processed by a designated CPU. It should be noted that operations 302, 307 and 308 may, for example, be performed by the system administrator. Further, the automatic binding at operation 310 may, for example, be performed by the operating system. The automatic binding performed at operation 310 is further described below for Fig. 3B.

### Operation 310: Automatic Binding

Fig. 3B illustrates an operation 310 for automatically binding an instance of a service provider application in a multi-CPU environment in accordance with one embodiment of the invention. As noted above for method 300, the operation 310 can, for example, be performed by the operating system 110 of Fig. 1B. Thus, for example, binding of an instance of a service provider application in a multi-CPU environment can automatically be achieved by the operating system without requiring further human intervention.

Initially, at operation 352, an instance of an application is started as a listener that listens to a specific network address (e.g., IP address) that is, in turn, assigned to a particular network interface (e.g., network interface card). When an application instance is started as a listener, it means that the application only responds to requests from a specific component on the network. For example, if application foo is started as a listener (foo1) assigned to a node A, then fool will only respond to queries or commands from node A even if another node B requests foo operations. In that case, node B would require another, different instance of foo (foo2) in order to complete foo operations. Thus, as a result of operation 352, the instance of the application will effectively be assigned (or bound) to a particular network address. Next, at operation 354, it is determined which network interface is assigned to which network address (i.e., the address that the application listener is listening to) that was assigned as a previous step 307 (FIG. 3A). Again, it should be noted that each network interface can be assigned a network address, for example, by an administrator (e.g., operation 307 of Fig. 3A)..

Thereafter, at operation 356, it determined which CPU is to be interrupted by a network interface that is assigned to a particular network address. In this manner, a CPU is assigned (or bound) to a particular network interface. As such, the CPU is thusly designated to process incoming connections for that particular network interface. As will be appreciated, this determination can be automatically made by the operating system based on the information that is stored when the binding of the CPU is performed. Binding of the CPU to a network interface is further described below for Figs. 4, 5, and 6.

Accordingly, at operation 358, a determination is made as to whether the CPU designated in step 356 has been interrupted by a network interface. That is, in this example, an incoming connection handled by the network interface requires some operation that will be handled by the designated CPU. If it is determined at operation 358 that the designated CPU has been interrupted, operation 310 proceeds to operation 360 where the application listener is bound to an s-queue assigned to the interrupted (designated ) CPU. As such, binding of the application instance to the network interface can be easily accomplished by the application listener when the CPU is bound to the network interface (as in step 356) in a "vertical perimeter" protection mechanism which may be implemented in accordance with the invention. The vertical perimeter protection mechanism is further described below (*see* FIGS. 4, 5, and 6). Once the application instance is bound to the s-queue at operation 360, each of the following incoming connections for that particular interface are bound to the s-queue of the designated CPU in accordance with a "vertical perimeter" protection mechanism at operation 362. The operation 310 ends following operation 362.

Figure 4 illustrates a vertical perimeter protection mechanism in accordance with one embodiment of the invention. In particular, Figure 4 is an illustration of an example of a multiprocessor server 400 comprising a plurality of network interface cards (NIC's)(422, 424, and 426) that provide connection interfaces to a client (e.g., a port) in accordance with an embodiment of present invention. An example of a multiprocessor server 400 also comprises a plurality of central processing units (CPUs)(410, 412, and 414) or processors wherein each NIC is assigned to a specific CPU (e.g., NIC 422 is assigned to CPU 410). That is, for a given NIC, the connections handled by that NIC are assigned to be processed by a specific CPU. The present embodiment provides a system for per CPU synchronization called vertical perimeters inside a merged TCP/IP module. The vertical perimeter is implemented using a serialization queue, or data structure called s-queue in one embodiment. Vertical perimeters advantageously assure that only a single thread can process a given connection at any time, thus serializing access to the TCP connection structure by multiple threads (from both read and write sides) in a merged TCP/IP module. Compared to a conventional perimeter, a vertical perimeter protects the whole connection state from IP to socket instead of merely protecting a module instance. Table 1 below comprises an example of a data structure for s-queue in accordance with one embodiment of the present invention.

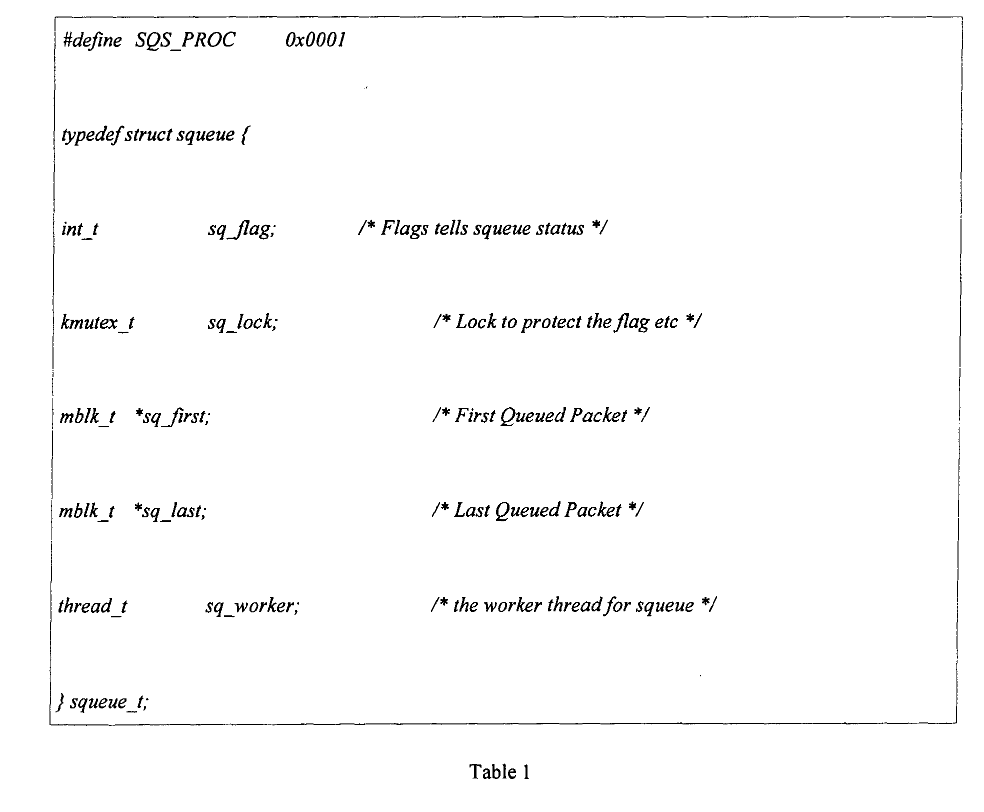

The functionality of the s-queue is described as follows. Each CPU of the server system has an associated s-queue for queuing packets received by an associated NIC (e.g., s-queue 1(416) queues packets received by NIC 1(422) for CPU 1(410)). In addition, each CPU has an optional associated cache memory for storing connection information associated with a NIC along with other CPU associated information. For example, cache 1(404) is associated with CPU 1(410) which is in turn associated with NIC 1(422). Thus, cache 1(404) may store information about connections associated with CPU 1(410) through NIC 1(422). In one example embodiment of the present invention, a connection data structure is utilized that classifies all connections and provides routing information such that all packets associated with a particular connection are routed to a singly assigned processor. The details of the connection data structure are discussed in greater detail below. Both connection and s-queue data structures can reside in a computer readable memory.

As noted above, the s-queue data structure queues tasks to be performed by an associated processor. In one embodiment of the present invention these tasks include the processing of a communication packet associated with a TCP connection. In accordance with other embodiments of the present invention, once the processing starts for a data packet, a single processor will process the data packet through any number of protocol layers without requiring additional locks or queuing as is conventionally required for moving packets between protocol layers. Furthermore, the same processor may similarly process all other packets of a particular TCP connection.

As noted above, a connection data structure may be used and associated with a TCP connection. The connection data structure stores a pointer to an associated s-queue and routes packets to their respective processors. This is true for both in-bound and out-bound packets.

A connection data structure lookup for inbound packets is done outside the perimeter (i.e. outside the vertical perimeter), using an IP connection classifier, as soon as a packet reaches the IP portion of the merged TCP/IP module. Based on the classification, the connection data structure is retrieved from a table 402 resident in memory. For new connections, creating a connection data structure, assigning it to an s-queue, and inserting it into a connection classifier table 402) occurs outside the vertical perimeter. As a result, all packets for the same connection are processed on the s-queue to which it is bound. Advantageously, processing all packets associated with a connection on the same processor decreases processing time for the packet by reducing data state conflicts between protocol layers, for instance. Furthermore, a localized cache can be used in accordance with embodiments of the invention to further decrease processing time.

When a packet is received from a NIC (e.g., NIC 424), an interrupt thread classifies the packet and retrieves the connection data structure from the connection classifier table 402 and the instance of the vertical perimeter or s-queue, on which the packet needs to be processed. For a new incoming connection, the connection is assigned to the vertical perimeter instance attached to the interrupted CPU associated with the NIC (e.g. step 310), on which the connection was received. For outbound processing, a connection data structure can also stored in the file descriptor for the connection so that the s-queue can be retrieved from the connection classifier table 402.

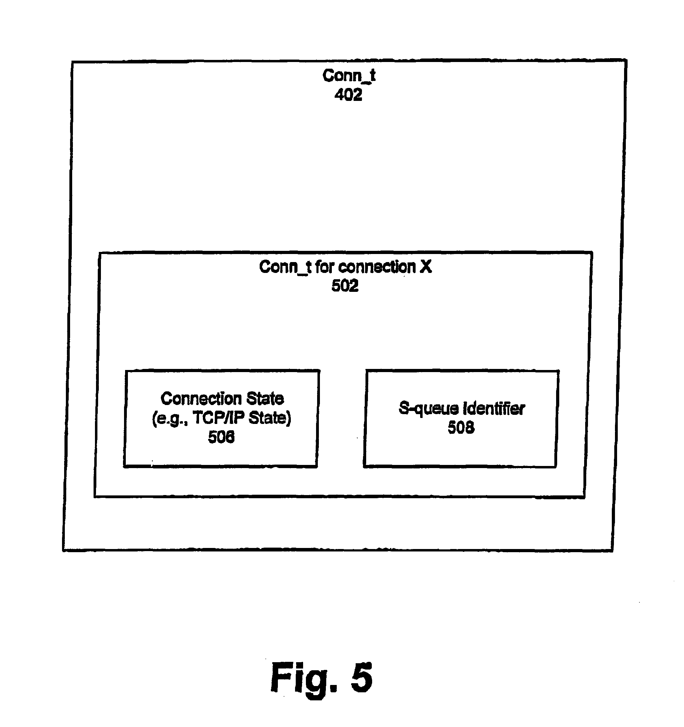

Figure 5 is an illustrative representation of an example of a connection data structure in accordance with an embodiment of the present invention. In particular, the connection data structure illustrated is named conn_t. The nomenclature of conn_t is for convenience only and should not be construed to impart any limitation to the concept of connection data structure. The conn_t 402 stores information specific to a connection established on a server (e.g., server 400 from Figure 4). When a new connection is established on a server, a conn_t is automatically created and stored in a memory resident database. The conn_t, in one embodiment of the present invention, comprises a connection state 506 (e.g. A TCP/IP state), and an s-queue identifier 508. It may be appreciated that the conn_t may also include various other entries to facilitate the processing of packets associated with the particular connection. In one embodiment of the invention, the s-queue identifier 508 also comprises a CPU identifier that defines a single processor for which the s-queue is processed on.

For example, in one embodiment of the invention, when a packet is received, classification information (e.g., connection address information) is retrieved from the header portion of a packet. A hash index is computed based on an associated conn_t that is retrieved from the s-queue identifier 508. If an entry is not found, a new conn_t is created using the connection address information as the connection identifier. The s-queue identifier 508 may further define a specific CPU to which the connection is assigned. The CPU information may be further stored in the conn_t. Thus, the information provides for packets assigned to the connection to be routed to the proper processor.

Table 2 illustrates an example of a connection data structure (conn_t) used in one embodiment of the present invention.

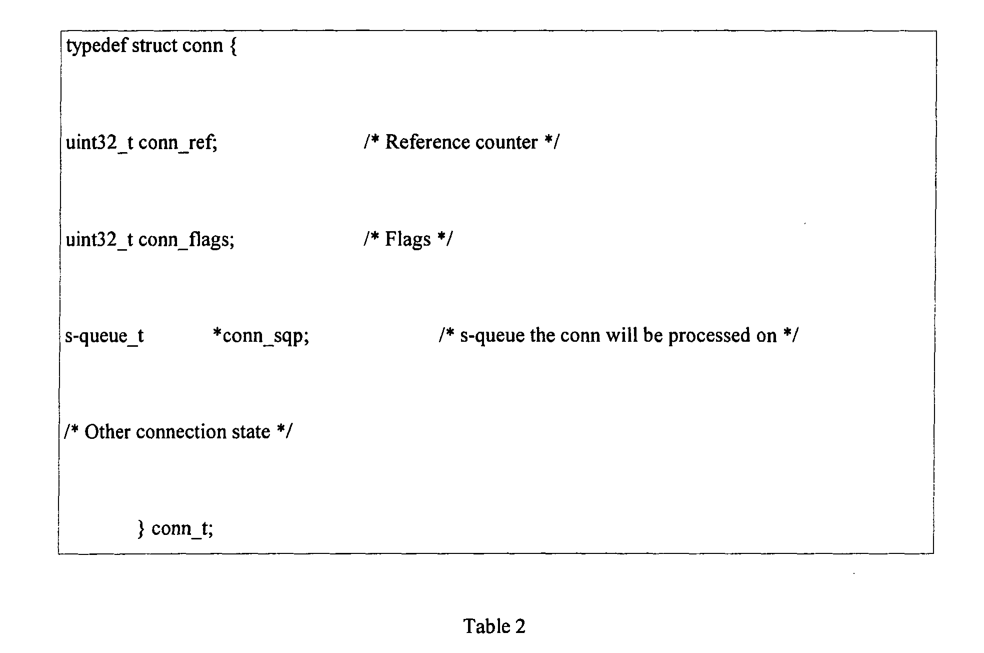

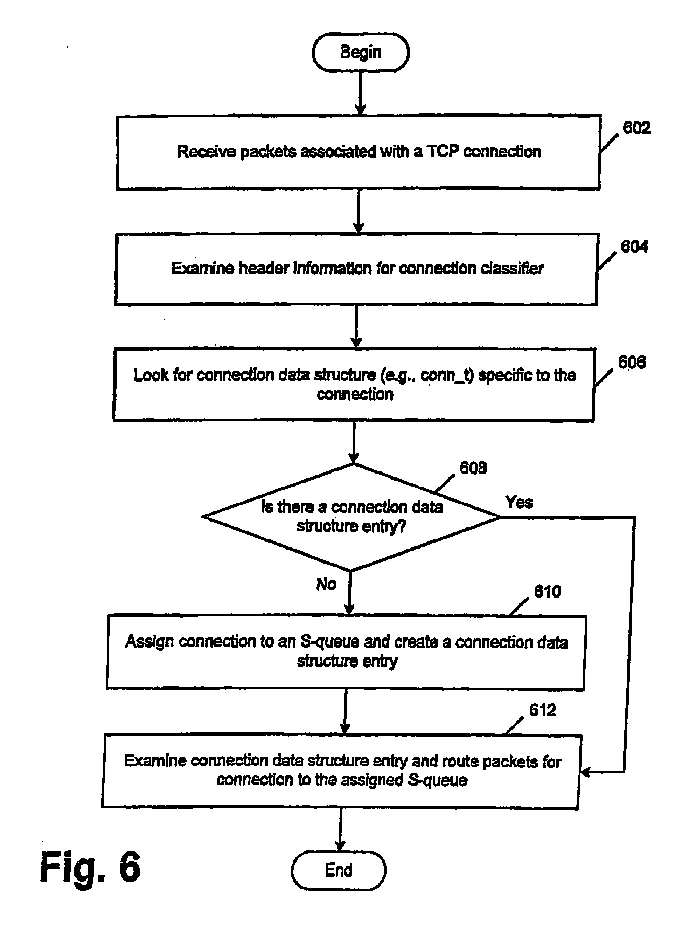

Figure 6 is a flow diagram of an example of a computer implemented process 600 for assigning a connection to a single processor on a multi-processor server system in accordance with embodiments of the present invention. An example of a process 600 begins with step 602 wherein packets associated with a TCP connection are received. The next step 604 is to examine the header portion of a packet to classify the packet. As stated above, in one embodiment of the present invention, a connection may be classified based on local IP address, a remote IP address, a local port address and a remote port address. Once the packet is examined, a search for the associated connection data structure (e.g. conn_t) is initiated at step 606.

In step 608, the presence of a connection data structure entry is determined. If a connection data structure entry is not found, in the next step 610, the connection is assigned to a specific s-queue that corresponds to a single processor and a connection data structure entry is created specifically for the new connection. However, if a connection data structure entry is found, in the next step 612, the connection data structure entry is examined and the attributes defined in the connection data structure entry are retrieved (e.g., assigned s-queue, TCP sequence). The packet is then routed to the assigned s-queue associated with the assigned processor. The same method is used to create a connection data structure entry and assign it to an s-queue for a new outbound connection.

In one embodiment of the present invention, the connection data structure entry data is stored in a cache associated with the processor attached to assigned s-queue. By storing the connection data structure information (e.g., conn_t) in a local cache, the time for retrieval is significantly reduced by eliminating the steps required to retrieve the data from a remote cache (e.g., a common cache).

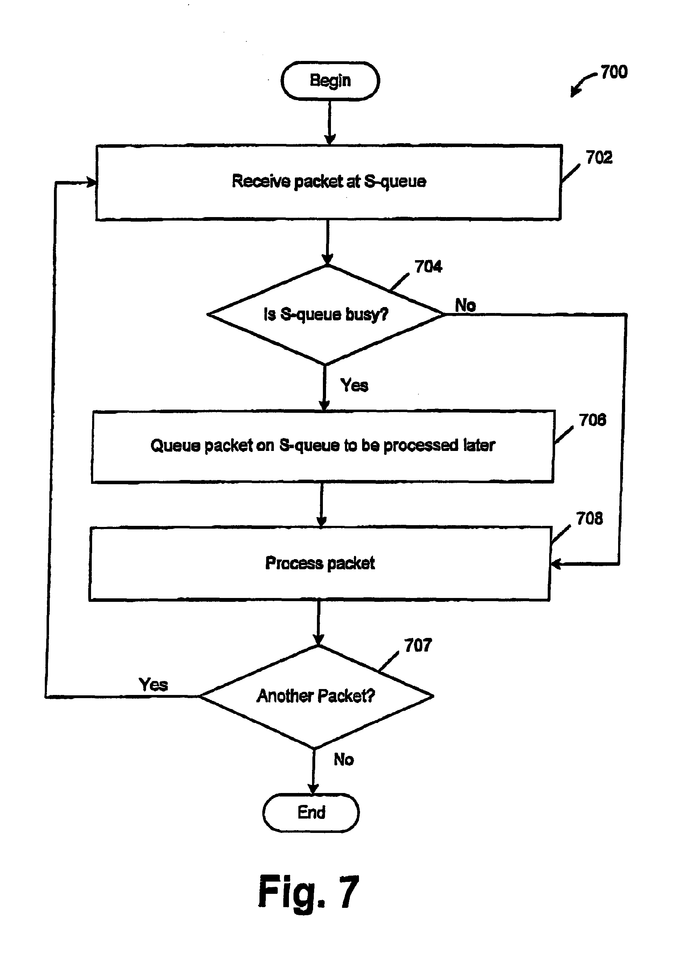

Figure 7 is a flow diagram of an example of a computer implemented process 700 wherein a packet destined for a particular processor is routed to an s-queue in accordance with an embodiment of the present invention. At a first step 702, a packet is received at an s-queue. Then in step 704, the status of the s-queue is determined. If the s-queue is busy, the packet is queued at step 706 and will be processed at step 708 when the s-queue is available.

However, if it is determined that the s-queue is not busy, the method will proceed to step 708 and process the packet. In accordance with embodiments of the present invention, a thread will process a packet through the protocol layers without interruption, except by interrupt threads to queue any new packets received during processing as at step 706. Therefore, if the s-queue is busy (e.g., occupied by another thread processing an inbound or outbound packet), the processor is interrupted to queue the incoming (or outgoing) packet assigned to that processor at step 706. The method 700 then continues at step 707 to wait for the next packet. When all packets have been received, the method ends.

In accordance with embodiments of the invention, the time to process a packet is significantly reduced by processing all packets associated with a particular connection on the same processor and without interruption or queuing generally.

Embodiments of the present invention, a system and method for vertical perimeter protection have been described. While the present invention has been described in particular embodiments, it should be appreciated that the present invention should not be construed as limited by such embodiments.

The following related applications are hereby incorporated herein by reference for all purposes:
U.S. Patent Application No. 10/683,933, entitled "A SYSTEM AND METHOD FOR VERTICAL PERIMETER PROTECTION", filed on October 10, 2003;
U.S. Patent Application Number 10/683,720, entitled "MULTI-THREADED ACCEPT MECHANISM IN A VERTICAL PERIMETER COMMUNICATION ENVIRONMENT" by Sunay Tripathi, filed October 10, 2003;
U.S. Patent Application Number 10/683,897, entitled "A METHOD AND SYSTEM FOR PROCESSING COMMUNICATIONS PACKETS ACCORDING TO EVENT LISTS" by Sunay Tripathi and E. Nordmark, filed October 10, 2003;
U.S. Patent Application Number 10/683,959, entitled "RUNNING A COMMUNICATION PROTOCOL STATE MACHINE THROUGH A PACKET CLASSIFIER" by Sunay Tripathi and Bruce Curtis, filed October 10, 2003;
U.S. Patent Application Number 10/683,934 entitled "A METHOD FOR BATCH PROCESSING RECEIVED MESSAGE PACKETS" by Sunay Tripathi and S. Kamatala, filed October 10, 2003; and
U.S. Patent Application Number 10/683,762, entitled "A METHOD FOR TRANSMITTING PACKET CHAINS" by Sunay Tripathi, Bruce Curtis and C. Masputra, filed October 10, 2003.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and it's practical application, to thereby enable others skilled in the art to best utilize the invention and various embodiments with various modifications as are suited to the particular use contemplated.

## Claims

1. A method of providing services of an application comprising:
providing a plurality of network interfaces;
providing a plurality of CPU's;
running an instance of the application for each one of the plurality of network interfaces;
designating a separate one of said plurality of CPU's to each instance; and
binding a separate one of said plurality of network interfaces to each CPU, whereby each network interface is handled solely by the CPU to which that network interface is bound.

2. A method as recited in claim 1, further comprising:
assigning a separate network address to each one of the plurality of network interfaces.

3. A method as recited in claim 2, wherein each separate network address is an Internet Protocol (IP) address.

4. A method as recited in claim 2 or claim 3, wherein said step of running an instance of the application for each one of the plurality of network interfaces comprises:
for each one of the plurality of network interfaces, initiating a listener that listens for the network address that is assigned to that network interface.

5. A method as recited in any one of the preceding claims, further comprising:
providing a processing queue for each of the plurality of CPU's;
assigning a separate one of the processing queues to each one of the plurality of CPUs, wherein the processing queue assigned to a particular CPU provides single threaded processing of data related to an instance of the application.

6. A method as recited in claim 5 wherein each processing queue is a sequential queue (s-queue).

7. A method as recited in claim 5 or claim 6, wherein each single threaded processing is uninterrupted while processing the data related to an instance of the application.

8. A method as recited in any one of claims 5 to 7, further comprising:
receiving data packets;
processing each data packet to determine a particular one of the processing queues corresponding to connection classifier information in the data packet; and
routing the data packet to the determined processing queue.

9. A method as recited in claim 8, further comprising:
processing the packet by the determined processing queue.

10. A method as recited in claim 9, further comprising:
if the determined processing queue is busy, waiting before the step of processing the packet by the determined processing queue.

11. A method as recited in any one of the preceding claims, wherein the step of running an instance of the application for each one of the plurality of network interfaces and the step of designating a separate one of said plurality of CPU's to each instance is performed automatically by an operating system.

12. A computer system configured to provide services of an application, the computer system comprising:
a plurality of network interfaces;
a plurality of CPU's, wherein each separate CPU has bound to it a separate one of said plurality of network interfaces,
in an application layer, a running instance of the application for each one of the plurality of network interfaces, wherein a separate one of said plurality of CPU's is designated to each instance; and
whereby each network interface is handled solely by the CPU to which that network interface is bound.

13. A computer system as in claim 12, wherein:
a separate network address is assigned to each one of the plurality of network interfaces.

14. A computer system as in claim 13, wherein each separate network address is an Internet Protocol (IP) address.

15. A computer system as claim 13 or claim 14, wherein said running instance of the application for each one of the plurality of network interfaces includes a listener that listens for the network address that is assigned to that network interface.

16. A computer system as in any one of claims 12 to 15, further comprising:
a processing queue for each of the plurality of CPU's, wherein a separate one of the processing queues is assigned to each one of the plurality of CPUs, wherein the processing queue assigned to a particular CPU is configured to provide single threaded processing of data related to an instance of the application.

17. A computer system as in claim 16, wherein each processing queue is a sequential queue (s-queue).

18. A computer system as in claims 16 or claim 17, wherein each single threaded processing is configured to be uninterrupted while processing the data related to an instance of the application.

19. A computer system as in any one of claims 16 to 18, further configured to:
receive data packets;
process each data packet to determine a particular one of the processing queues corresponding to connection classifier information in the data packet; and
route the data packet to the determined processing queue.

20. The computer system as in claim 19, further configured to:
process the packet by the determined processing queue.

21. The computer system as in claim 20, further configured to:
if the determined processing queue is busy, wait before processing the packet by the determined processing queue.

22. A computer system as in any one of claims 12 to 21, wherein the computer system is configured such that running instances of the applications network interfaces and designating a separate one of said plurality of CPU's to each instance is performed automatically by an operating system.

23. An operating system for a computer system comprising a plurality of instances of an application, a plurality of CPU's, each CPU configured to process a separate one of said plurality of instances, and a plurality of network interfaces for a plurality of network connections to said computer system, wherein the operating system is configured:
automatically to designate a separate CPU for processing each separate one of said instances of said application; and
automatically to designate each of the plurality of network interfaces to one of the plurality of CPU's, thereby assigning each one of the network interfaces to an instance of said application.

24. A computer system comprising:
a plurality of instances of an application;
a plurality of CPU's, each CPU configured to process a separate one of said plurality of instances; and
a plurality of network interfaces for a plurality of network connections to said computer system;
the computer system further comprising the operating system of claim 23.
